# EUROPEAN PATENT APPLICATION

(11) **EP 2 688 070 A1**
(43) Date of publication of application: **22.01.2014**
(21) Application number: 13167023.4
(22) Date of filing: 08.05.2013
(51) Int. Cl.: G11B 19/16, G11B 19/22

(54) **Decelerating mechanism and electronic device using same**

(30) Priority: 19.07.2012 CN 201210250134
(71) Applicant: Hon Hai Precision Industry Co., Ltd., New Taipei City (TW)
(72) Inventor: Peng, Yao-Che, New Taipei (TW); Chang, Hung-Chi, New Taipei (TW)
(74) Representative: Gray, John James

(57) **Abstract**

An electronic device (100) for reading and writing information on an optical disc (200) includes a base (10), a cover (20), and a decelerating mechanism (30). The decelerating mechanism (30) can switch between an unresisting position and a resisting position. When the cover (20) is closed, the decelerating mechanism (30) moves from the resisting position to the unresisting position to allow rotation of the optical disc (200). When the cover (20) is opened, the decelerating mechanism (30) moves to the resisting position for braking and stopping the rotation of the optical disc (200).

## Description

### Description of Related Art

An optical disc, such as Compact Disc (CD), Digital Video Disc or Digital Versatile Disc (DVD) and Mini Disc (MD) is rotated by a driving unit such as a motor provided in a disc player, and the disc player reads/writes data from/to the optical disc. The disc player further includes a base and a cover rotatably coupled to the base. In use, the optical disc is housed in the base by closing the cover and removed by opening the cover. However, when the cover is opened during rotation of the optical disc, the optical disc can jump out from the base, causing damage to the optical disc.

Therefore, there is room for improvement in the art.

### Summary

According to an exemplary embodiment of the invention, an electronic device capable of reading and writing information on an optical disc is provided. The electronic device includes a base, a cover, and a decelerating mechanism. When the cover is closed, the decelerating mechanism disengages from the optical disc to allow rotation of the optical disc. When the cover is opened, the decelerating mechanism engages with the optical disc for braking and stopping the rotation of the optical disc.

### BRIEF DESCRIPTION OF THE DRAWINGS

Embodiments of the invention will now be described, by way of example only, with reference to the accompanying drawings. Many aspects of the embodiments can be better understood with references to the following drawings. The components in the drawings are not necessarily drawn to scale, the emphasis instead being placed upon clearly illustrating the principles of the embodiments. Moreover, in the drawings, like reference numerals designate corresponding parts throughout two views.

FIG. 1 is a partial, exploded view of an electronic device with a decelerating mechanism.

FIG. 2 is a similar to FIG. 1, but viewed from another aspect.

FIG. 3 is partial, isometric view of the decelerating mechanism of FIG. 2.

FIG. 4 is a partial, cross-sectional view taken along line IV-IV of the electronic device of FIG. 1 in a first state of use.

FIG. 5 is similar to FIG. 4, but showing another state of use.

### DETAILED DESCRIPTION

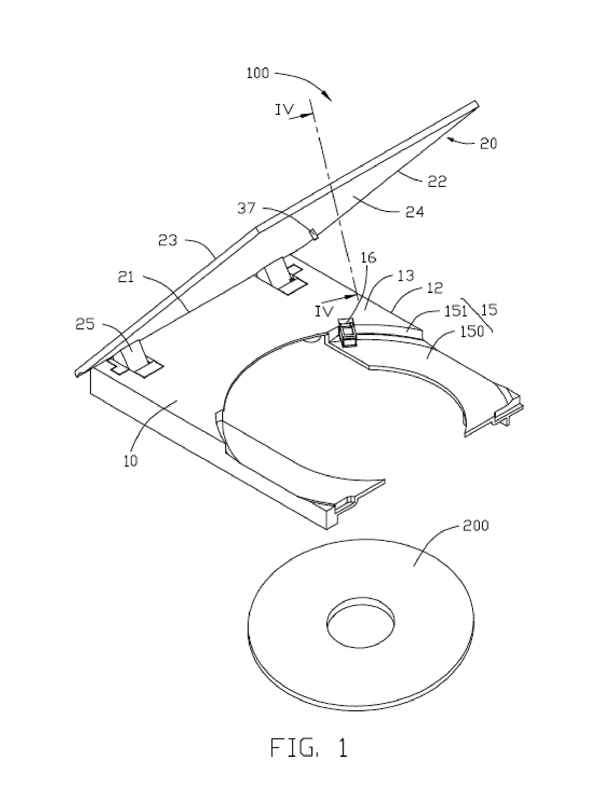

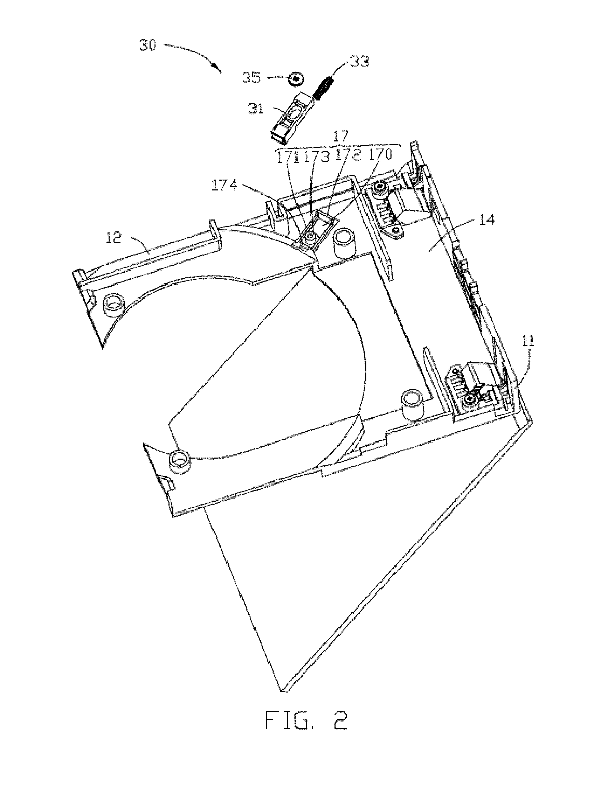

Referring to FIGS. 1 and 2, an electronic device 100 for writing or retrieving data on an optical disc 200 is shown. The electronic device 100 includes a base 10, a cover 20 and a decelerating mechanism 30. The base 10 receives the optical disc 200, a driving component (not shown) and other electrical components. The cover 20 is rotatably connected to the base 10. The cover 20 can be raised to be opened and lowered to be closed, relative to the base 10. The decelerating mechanism 30 stops the rotation of optical disc 200 as the cover 20 is opened. The electronic device 100 may be a disc player in a notebook computer, or the like. In the embodiment, the electronic device 100 is a disc player for writing or reading data on an optical disc.

The base 10 is substantially rectangular, and includes a first sidewall 11, a second sidewall 12, a first surface 13 facing the cover 20 and a second surface 14 opposite to the first surface 13. The first sidewall 11 is perpendicular to the second sidewall 12. The first surface 13 is recessed to define a substantially circular recess portion 15 for receiving the optical disc 200. When viewed from the first surface 13, the recess portion 15 is recessed in the first surface 13; when viewed from the second surface 14, the recess portion 15 protrudes from the second surface 14.

The recess portion 15 includes a bottom surface 150 and a side surface 151. The bottom surface 150 faces the cover 20. The side surface 151 is arranged between the first surface 13 and the bottom surface 150. The side surface 151 defines a through hole 16.

A receiving portion 17 is arranged on the second surface 14 and is connected to the side surface 151. The receiving portion 17 includes a bottom wall 170, two first spaced protrusion walls 171, a second protrusion wall 172 and a restriction component 173. The second protrusion wall 172 is opposite to the side surface 151. The first protrusion walls 171 connect opposite ends of the second protrusion wall 172 and are arranged between the side surface 151 and the second protrusion wall 172. An opening 174 is defined between two ends of the first protrusion walls 171 away from the second protrusion wall 172 and communicates with the through hole 16, for joining the recess portion 15 with the receiving portion 17. The restriction component 173 is substantially columnar, and protrudes from the bottom wall 170 and is adjacent to the opening 174.

The cover 20 is rotatably connected to the first sidewall 11. The cover 20 includes a third sidewall 21, a fourth sidewall 22 perpendicular to the third sidewall 21, a third surface 23 and a fourth surface 24 opposite to the third surface 23. The third sidewall 21 corresponds to the first sidewall 11. The fourth sidewall 22 corresponds to the second sidewall 12. The third surface 23 is opposite to the first surface 13. Two rotating portions 25 protrude from opposite ends of a side of the third surface 23 near the third sidewall 21. Each rotating portion 25 is rotatably connected to an end of the base 10 near the first sidewall 11 via a pivot shaft (not shown), for allowing the cover 20 to open and close relative to the base 10.

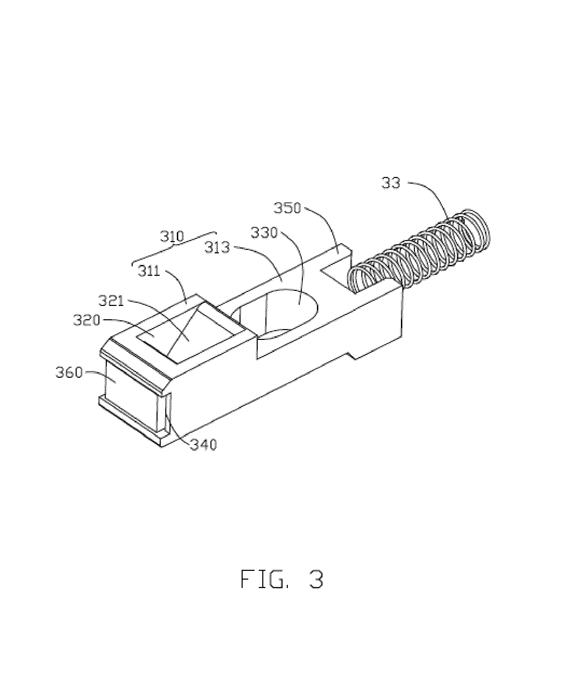

Referring to FIG. 3, the decelerating mechanism 30 is slideably arranged on the second surface 14 and can move between a resisting position for slowing down and stopping the optical disc 200 and an unresisting position to allow free rotation of the optical disc 200. The decelerating mechanism 30 includes a decelerating component 31, an elastic component 33 and a latching component 37 (see FIG. 1).

The decelerating component 31 is slideably received in the receiving portion 17 and is capable of protruding out of and retracting into the through hole 16. The decelerating component 31 includes a body 310 and a decelerating portion 360 secured to the body 310. The body 310 includes an engaging portion 311 and a positioning portion 313 connected to the engaging portion 311. The vertical height of the engaging portion 311 is substantially greater than the vertical height of the through hole 16. The vertical height of the positioning portion 313 is substantially smaller than the vertical height of the through hole 16. Thus, the body 310 is stepped in shape.

The engaging portion 311 defines a substantially strip-shaped latching slot 320 and a first receiving groove 340. The latching slot 320 is recessed in a surface of the engaging portion 311 facing the second surface 14 and extends from the positioning portion 313 to the engaging portion 311. A guiding surface 321 slantingly extends from an edge of the latching slot 320 adjacent to the positioning portion 313 in a direction away from the positioning portion 313. The first receiving groove 340 is recessed in an end of the engaging portion 311 away from the positioning portion 313.

The positioning portion 313 defines a substantially elongated sliding slot 330 and a second receiving groove 350. The second receiving groove 350 is recessed in an end of the positioning portion 313 away from the engaging portion 311. The sliding slot 330 penetrates through the positioning portion 313 and extends in a lengthwise direction of the sliding slot 310. The sliding slot 330 is arranged between the latching slot 320 and the second receiving groove 350. A fixing component 35 extends through the sliding slot 330 and is fixed to the restriction component 173, for securing the decelerating component 31 to the second surface 14. The size of the restriction component 173 is slightly smaller than the size of the sliding slot 330, thus the decelerating component 31 is capable of being moved relative to the restriction component 173.

The decelerating portion 360 is secured to the first receiving groove 340 for making physical contact with the optical disc 200. In the embodiment, the decelerating portion 360 is made of soft but durable material.

One end of the elastic component 33 is received in the second receiving groove 350, and another end of the elastic component 33 is connected to the fourth sidewall 172. The elastic component 33 provides a constant force for urging the decelerating component 31 to extend out of the through hole 16 whether the decelerating mechanism 30 is in the resisting position or in the unresisting position.

Further referring to FIG. 1, the latching component 37 is substantially column-shaped, and protrudes from the fourth surface 24 to correspond to the latching slot 320. In the embodiment, the latching component 37 is a post secured to the fourth surface 24.

In assembly, the positioning portion 313 extends through the through hole 16 and is received in the receiving portion 17. The engaging portion 311 protrudes out of the side surface 151, with the decelerating portion 360 facing the optical disc 200. The fixing component 35 extends through the sliding slot 330 and is fixed to the restriction component 173, for preventing the decelerating component 31 from vibrating or juddering when the decelerating component 31 is moved. The elastic component 33 is aligned with the body 310 and is arranged between the positioning portion 313 and the fourth sidewall 172. Thereby, the decelerating component 31 is slideably received in the receiving portion 17 and is capable of being moved in a first direction by a force from the latching component 37. The decelerating component 31 is further capable of being moved in a second direction, the reverse of the first direction, by the constant urging force from the elastic component 33. The first direction is from the engaging portion 311 toward the positioning portion 313 in a lengthwise direction of the sliding slot 310.

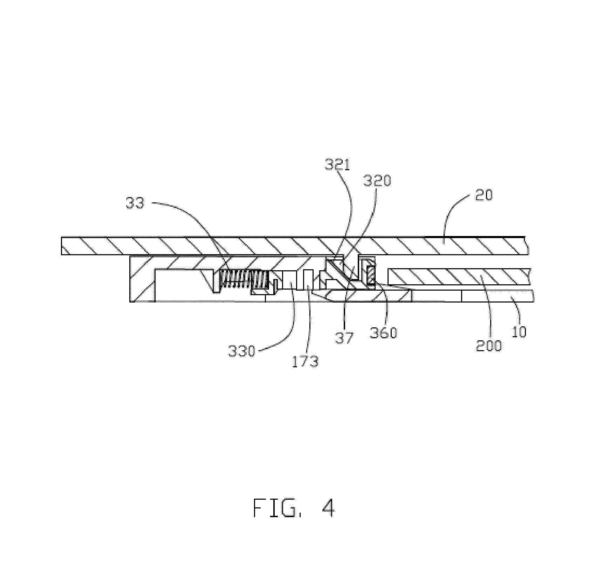

Referring to FIG. 4, when the cover 20 covers the base 10, the latching component 37 extends into the latching slot 320 and slides along the guiding surface 321. At this time, the latching component 37 engages with the guiding surface 321 to drive the decelerating component 31 to disengage from the optical disc 200 and further compresses the elastic component 33. Due to the engagement between the restriction component 173 and the sliding slot 330, the decelerating component 31 steadily retracts into the through hole 16 (in the first direction). When an end of the sliding slot 330 near the engaging portion 311 resists the restriction component 173, the decelerating mechanism 30 is in the unresisting position with the decelerating portion 360 keeping a predetermined distance from the optical disc 200. Thus, the optical disc 200 is capable of being driven to rotate by the motor or other driving component.

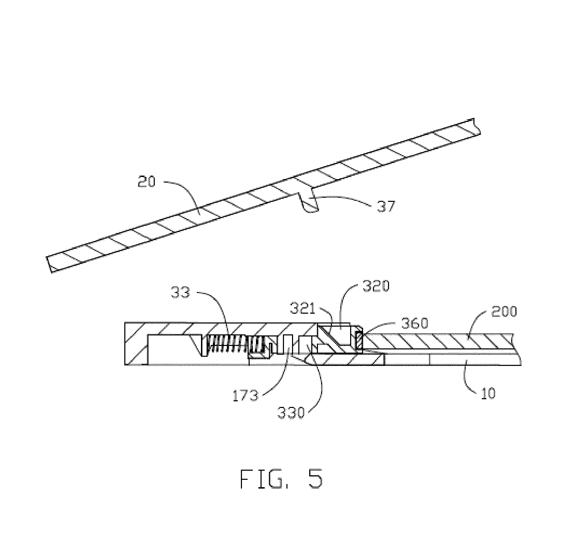

Referring to FIG. 5, when the cover 20 opens from the base 10, the latching component 37 disengages from the latching slot 320. At this time, the deformed elastic component 33 provides a force to drive the decelerating component 31 to extend out of the through hole 16 to push against the optical disc 200. When an end of the sliding slot 330 opposite to the engaging portion 311 resists the restriction component 173, the decelerating mechanism 30 is in the resisting position with the decelerating portion 360 in contact with the rim of the optic disc 200 for braking and stopping the rotation of the optical disc 200, providing a non-electrical (a physical) mechanism to safely stop the rotation of the optical disc 200.

The position of the latching component 37 and the engaging portion 320 can be changed according to need. For example, the latching component 37 can be arranged on the decelerating component 31, and the engaging portion 320 is arranged on the cover 20. The manner of engagement between the latching component 37 and the engaging portion 320 also can be changed according to need. For example, the latching component 37 and the engaging portion 320 can be hooks which engage with each other. Furthermore, the elastic component 33 can be, for example, a torsion spring.

It is to be understood, however, that even though information and advantages of the present embodiments have been set forth in the foregoing description, together with details of the structures and functions of the present embodiments, the disclosure is illustrative only; and that changes may be made in detail, especially in the matters of shape, size, and arrangement of parts within the principles of the present embodiments to the full extent indicated by the broad general meaning of the terms in which the appended claims are expressed.

## Claims

1. An electronic device for reproducing information recorded on an optical disc, comprising:
a base for positioning the optical disc;
a cover rotatably connected to the base and capable of being opened and closed relative to the base; and
a decelerating mechanism capable of switched between an unresisting position for allowing free rotation of the optic disc and a resisting position for resisting the optic disc;
wherein when the cover is closed, the decelerating mechanism moves from the resisting position to the unresisting position for allowing free rotation of the optical disc; when the cover is opened, the decelerating mechanism moves from the unresisting position to the resisting position for stopping the optical disc.

2. The electronic device of claim 1, wherein the decelerating mechanism comprises a decelerating component movably secured to the base and an elastic component, when the cover is closed, the decelerating component disengages with the optical disc for allowing the optical disc to rotate and compress the elastic component; when the cover is opened, the deformed elastic component drives the decelerating component to push against the optical disc for stopping the optical disc.

3. The electronic device of claim 2, wherein the decelerating mechanism comprises a latching component secured to the cover, when the cover is closed, the latching component engages with the decelerating component for driving the decelerating component to keep a predetermined gap with the optical disc; when the cover is opened, the latching component disengages from the decelerating component for allowing the decelerating component to contact the optical disc.

4. The electronic device of claim 3, wherein the decelerating component comprises an engaging portion, the engaging portion defines a latching slot having a guiding surface, the guiding surface is inclined from the positioning portion to the engaging portion; when the cover is closed, the latching component slides to the guiding surface and is locked in the latching slot.

5. The electronic device of claim 4, wherein the engaging portion defines a first receiving groove opposite to the elastic component, the decelerating mechanism comprises a decelerating portion; the decelerating portion is received in the first receiving groove for contacting with the optical disc when the cover is opened.

6. The electronic device of claim 4 or 5, wherein the decelerating component comprises a positioning portion connected to the engaging portion, and the base comprises a restricting component; the elastic component is arranged between the base and the positioning portion, the positioning portion defines a sliding slot arranged between the elastic component and the engaging portion, and the restricting component extends through the siding slot for fixing the decelerating component to the base.

7. The electronic device of claim 6, wherein the size of the restricting component parallel to the moving direction of the decelerating component is smaller than the size of the sliding slot, and the size of the restricting component perpendicular to the moving direction of the decelerating component is equal to the size of the sliding slot, for allowing the decelerating component to move to the base.

8. The electronic device of claim 6 or 7, wherein the base comprises a first surface and a second surface opposite to the first surface, the first surface defines a recess portion for receiving the optical disc and a through hole, the second surface comprises a receiving portion; the through hole communicates the recess portion with the receiving portion, the decelerating component is slideably received in the receiving portion through the through hole.

9. A decelerating mechanism for stopping an optical disc received in an electronic device, the electronic device comprising a base for positioning the optical disc and a cover capable of being opened and closed to the base; the decelerating mechanism comprising:
a decelerating component movably secured to the base; and
an elastic component
wherein when the cover is closed, the decelerating component moves away from the optical disc and compress the elastic component; when the cover is opened, the elastic component drives the decelerating component to resist against the optical disc for stopping the optical disc.

10. The decelerating mechanism of claim 9, wherein the decelerating mechanism comprises a latching component secured to the cover, when the cover is closed, the latching component engages with the decelerating component for driving the decelerating component to keep a predetermined gap with the optical disc; when the cover is opened, the latching component disengages from the decelerating component for allowing the decelerating component to contact the optical disc.

11. The decelerating mechanism of claim 10, wherein the decelerating component comprises an engaging portion, the engaging portion defines a latching slot having a guiding surface, the guiding surface is inclined from the positioning portion to the engaging portion; when the cover is closed, the latching component slides to the guiding surface and is locked in the latching slot.

12. The decelerating mechanism of claim 11, wherein the engaging portion defines a first receiving groove opposite to the elastic component, the decelerating mechanism comprises a decelerating portion; the decelerating portion is received in the first receiving groove for contacting with the optical disc when the cover is opened.

13. The decelerating mechanism of claim 11 or 12, wherein the decelerating component comprises a positioning portion connected the engaging portion, and the base comprises a restricting component; the elastic component is arranged between the base and the positioning portion, the positioning portion defines a sliding slot arranged between the elastic component and the engaging portion, and the restricting component extends through the siding slot for fixing the decelerating component to the base.

14. The decelerating mechanism of claim 13, wherein the size of the restricting component parallel to the moving direction of the decelerating component is smaller than the size of the sliding slot, and the size of the restricting component perpendicular to the moving direction of the decelerating component is equal to the size of the sliding slot, for allowing the decelerating component to move to the base.

15. The decelerating mechanism of claim 13 or 14, wherein the base comprises a first surface and a second surface opposite to the first surface, the first surface defines a recess portion for receiving the optical disc and a through hole, the second surface comprises a receiving portion; the through hole communicates the recess portion with the receiving portion, the decelerating component is slideably received in the receiving portion through the through hole.
